# DEMANDE DE BREVET EUROPEEN

(11) **EP 4 398 108 A1**
(43) Date de publication de la demande: **10.07.2024**
(21) Numéro de dépôt: 24150837.3
(22) Date de dépôt: 09.01.2024
(51) Int. Cl.: G06F 11/34, G06F 11/30, G06F 11/00

(54) **PROCÉDÉ ET DISPOSITIF DE SURVEILLANCE - AVEC MITIGATION DE CONTENTION - D'APPLICATION(S) AVIONIQUE(S) EXÉCUTÉE(S) SUR UNE PLATEFORME AVEC PROCESSEUR MULTICOEUR, SYSTÈME ÉLECTRONIQUE AVIONIQUE ET PROGRAMME D'ORDINATEUR ASSOCIÉS**

(30) Priorité: 09.01.2023 FR 2300212
(71) Demandeur: THALES, 92190 Meudon (FR)
(72) Inventeur: LAMOUR, Pierrick, 33701 MERIGNAC (FR); LEONARDI, Nicolas, 33701 MERIGNAC (FR)
(74) Mandataire: Lavoix

(57) **Abrégé**

Ce procédé de surveillance d'application(s) logicielle(s) avionique(s) exécutée(s) par une plateforme avionique, embarquée à bord d'un aéronef, comportant un processeur multicoeur et hébergeant un système d'exploitation, est mis en oeuvre par un dispositif électronique de surveillance et comprenant, pour chaque application logicielle en cours d'exécution, une phase de surveillance comportant les étapes suivantes :
- acquisition d'une valeur d'au moins une grandeur caractéristique représentative d'une utilisation de la plateforme, chaque valeur acquise de grandeur caractéristique étant associée à l'application logicielle respective ;
- comparaison de chaque valeur acquise avec un seuil respectif correspondant à la grandeur caractéristique ;
- arrêt de l'exécution de l'application logicielle respective si au moins une valeur acquise est supérieure au seuil respectif ;
pour chaque grandeur caractéristique, le seuil respectif est déterminé pour une application contentionnante de référence lors de l'exécution de ladite application contentionnante de référence et d'une application sensible de référence au cours d'une phase préliminaire ; l'application contentionnante de référence étant propre à engendrer une augmentation d'un temps d'exécution de l'application sensible de référence selon un ratio de contention prédéfini, le ratio de contention étant égal au temps d'exécution de l'application sensible de référence lorsqu'exécutée en même temps que l'application contentionnante de référence divisé par un temps d'exécution de l'application sensible de référence lorsqu'exécutée seule par la plateforme ; la phase préliminaire précédant la phase de surveillance de chaque application logicielle.

## Description

La présente invention concerne un procédé de surveillance d'application(s) logicielle(s) avionique(s) apte(s) à être exécutée(s) par une plateforme avionique, la plateforme avionique étant destinée à être embarquée à bord d'un aéronef, comportant un processeur multicoeur et hébergeant un système d'exploitation, le procédé étant mis en oeuvre par un dispositif électronique de surveillance.

L'invention concerne également un programme d'ordinateur comportant des instructions logicielles qui, lorsqu'elles sont exécutées par un ordinateur, mettent en oeuvre un tel procédé de surveillance.

L'invention concerne également un système électronique avionique comprenant une mémoire apte à stocker au moins une application logicielle avionique ; une plateforme apte à exécuter chaque application logicielle avionique, la plateforme hébergeant un système d'exploitation ; et un tel dispositif électronique de surveillance de chaque application logicielle avionique.

L'invention concerne le domaine de la sûreté de fonctionnement (de l'anglais *safety)* des plateformes avioniques embarquées, en particulier de la surveillance des applications logicielles exécutées sur de telles plateformes avioniques embarquées.

Dans ce domaine de la sûreté de fonctionnement, la notion de déterminisme est forte, et l'utilisation de processeurs multicoeurs apporte une difficulté importante pour la qualification des plateformes. En effet, l'exécution simultanée de plusieurs logiciels sur un même processeur s'accompagne de risques de contentions à cause du partage de ressources communes (bus, mémoire), sans que le comportement du processeur, notamment lorsqu'il est multicoeur, puisse être facilement maitrisé.

Le terme « contention » désigne toute situation dans laquelle au moins une activité menée par au moins un coeur d'un processeur multicoeur subit des retards dans son exécution à cause du parallélisme temporel permis par ce processeur multicoeur.

L'origine des contentions est généralement l'usage de ressources communes du processeur ou du système d'exploitation, également appelé OS (de l'anglais *Operating System*) aboutissant à des attentes générant ces retards. L'effet d'une contention est alors un retard sur l'exécution d'une application logicielle hébergée sur un coeur.

Un premier exemple de contention est le bus (appelé souvent « *interconnect* ») reliant les coeurs les uns aux autres qui ne permet pas toujours des transactions simultanées entre coeurs ou entre les coeurs et les périphériques, tels que certaines mémoires cache intégrées ou la mémoire externe.

Un autre exemple de contention est l'usage de modules logiciels communs de l'OS installés sur un des coeurs et appelés par l'ensemble de coeurs, potentiellement simultanément. Des appels simultanés à de tels modules logiciels communs provoquent un arbitrage et une mise en attente de certaines demandes afin de sérialiser les traitements logiciels sur le coeur où le module logiciel commun est installé.

Un autre exemple de contention est une interruption momentanée de tous les coeurs sur évènement particulier sur un des coeurs afin de gérer un statut cohérent entre tous les coeurs.

Lorsque le processeur est en outre un processeur acheté auprès d'un fournisseur, ou processeur COTS (de l'anglais *Commercial Off-The-Shelf),* il est généralement impossible d'avoir accès au détail de conception des organes internes d'un tel processeur multicoeur, et il est donc très difficile, voire impossible de garantir un comportement déterministe du processeur.

Pour les processeurs mono-coeur, il existe des solutions permettant de gérer les dépassements d'allocation de durée d'une application. Avec ces solutions, même s'il existe plusieurs mécanismes de détection, la plateforme vient alors systématiquement tuer une application lorsqu'elle dépasse son allocation.

Toutefois, pour les processeurs multicoeur, avec de telles solutions, la ou les applications tuées sont alors celles dépassant leur allocation, mais pas nécessairement celle(s) engendrant le ralentissement.

Le but de l'invention est alors de proposer un procédé et un dispositif de surveillance d'au moins une application logicielle avionique apte à être exécutée sur une plateforme avionique, qui permette de surveiller plus efficacement l'au moins une application logicielle.

A cet effet, l'invention a pour objet un procédé de surveillance d'application(s) logicielle(s) avionique(s) apte(s) à être exécutée(s) par une plateforme avionique, la plateforme avionique étant destinée à être embarquée à bord d'un aéronef, comportant un processeur multicoeur et hébergeant un système d'exploitation, le procédé étant mis en oeuvre par un dispositif électronique de surveillance et comprenant, pour chaque application logicielle en cours d'exécution, une phase de surveillance comportant les étapes suivantes :
- acquisition d'une valeur d'au moins une grandeur caractéristique représentative d'une utilisation de la plateforme, chaque valeur acquise de grandeur caractéristique étant associée à l'application logicielle respective ;
- comparaison de chaque valeur acquise avec un seuil respectif correspondant à la grandeur caractéristique ;
- arrêt de l'exécution de l'application logicielle respective si au moins une valeur acquise est supérieure au seuil respectif ;
pour chaque grandeur caractéristique, le seuil respectif est déterminé pour une application contentionnante de référence lors de l'exécution de ladite application contentionnante de référence et d'une application sensible de référence au cours d'une phase préliminaire ; l'application contentionnante de référence étant propre à engendrer une augmentation d'un temps d'exécution de l'application sensible de référence selon un ratio de contention prédéfini, le ratio de contention étant égal au temps d'exécution de l'application sensible de référence lorsqu'exécutée en même temps que l'application contentionnante de référence divisé par un temps d'exécution de l'application sensible de référence lorsqu'exécutée seule par la plateforme ; la phase préliminaire précédant la phase de surveillance de chaque application logicielle.

Le procédé de surveillance selon l'invention permet alors d'anticiper la contention et de sanctionner la ou les applications qui sont à l'origine des ralentissements subis par la ou les autres applications.

Dans un contexte où plusieurs applications fonctionnent en parallèle et où chaque application doit fonctionner dans un temps imparti donné afin d'assurer son exécution déterministe, le procédé de surveillance selon l'invention permet donc, en cas de contention trop importante, d'agir sur les applications engendrant le ralentissement pour éviter que toutes les applications ne tombent entièrement.

Si la solution de l'état de la technique était appliquée, toute application dépassant son budget de temps, i.e. son allocation, serait alors coupée. Dans ce cas, on ne viendrait potentiellement pas couper l'origine du problème, car ce ne serait potentiellement pas l'application contentionnante qui serait arrêtée.

Le procédé de surveillance selon l'invention permet alors de déterminer quelle(s) application(s) dépasse(nt) un niveau d'agression acceptable par les autres applications, ce niveau d'agression correspondant au ratio de contention prédéfini, et chaque seuil respectif dont le dépassement déclenche l'arrêt de l'application surveillée est déterminé pour l'application contentionnante de référence qui engendre une augmentation du temps d'exécution de l'application sensible de référence selon ledit ratio de contention prédéfini.

Autrement dit, chaque seuil respectif est déterminé à partir de l'application contentionnante de référence qui caractérise un niveau maximal de contention admissible, i.e. le ratio de contention prédéfini, vis-à-vis d'autre(s) application(s) logicielle(s) exécutée(s) en parallèle sur la plateforme avec le processeur multicoeur.

Suivant d'autres aspects avantageux de l'invention, le procédé de surveillance comprend une ou plusieurs des caractéristiques suivantes, prises isolément ou suivant toutes les combinaisons techniquement possibles :
- chaque grandeur caractéristique et chaque seuil respectif associé sont chacun exprimés par unité de temps ;
- la plateforme comporte des ressources mémoire incluant une mémoire vive, une mémoire cache de premier niveau et une mémoire cache de deuxième niveau ; et chaque grandeur caractéristique est une grandeur représentative de l'utilisation des ressources mémoire ;
- chaque grandeur caractéristique est choisie parmi le groupe consistant en : une bande-passante occupée d'un bus d'accès à la mémoire vive ; un nombre de défauts de cache de premier niveau ; un nombre de défauts de cache de deuxième niveau ; un nombre de défauts de cache de troisième niveau ; un nombre de changements de pages en mode DDR ; et une combinaison des grandeurs précitées ;
- lors de la phase préliminaire, l'application contentionnante de référence est une application formée d'une boucle contentionnante exécutée plusieurs fois, la boucle contentionnante comportant plusieurs instructions d'écriture en mémoire vive, avec pour chaque instruction un saut d'adresse en écriture prédéfini,
   le nombre d'exécutions de la boucle contentionnante étant de préférence égal à une taille d'une ligne de la mémoire cache de deuxième niveau divisée par une taille du saut d'adresse en écriture ;
- lors de la phase préliminaire, l'application sensible de référence est une application formée d'une boucle sensible exécutée plusieurs fois, la boucle sensible comportant plusieurs instructions de lecture en mémoire vive, avec pour chaque instruction un saut d'adresse en lecture prédéfini,
   le nombre d'exécutions de la boucle sensible étant de préférence égal à une taille d'une ligne de la mémoire cache de deuxième niveau divisée par une taille du saut d'adresse en lecture ;
- lors de l'étape d'acquisition, chaque valeur de grandeur caractéristique est acquise séparément pour chacun des coeurs du processeur multicoeur ;
- les étapes d'acquisition et de comparaison sont réitérées lors de chaque appel au système d'exploitation ; et
- le système d'exploitation est un système d'exploitation fonctionnant de manière synchrone avec des événements système périodiques, et les étapes d'acquisition et de comparaison sont réitérées lors de chaque évènement système.

L'invention concerne également un programme d'ordinateur comportant des instructions logicielles qui, lorsqu'elles sont exécutées par un ordinateur, mettent en oeuvre un procédé de surveillance tel que défini ci-dessus.

L'invention concerne également un dispositif électronique de surveillance d'application(s) logicielle(s) avionique(s) apte(s) à être exécutée(s) par une plateforme avionique, la plateforme avionique étant destinée à être embarquée à bord d'un aéronef, comportant un processeur multicoeur et hébergeant un système d'exploitation, le dispositif de surveillance comprenant :
- un module d'acquisition configuré pour acquérir, pour chaque application logicielle en cours d'exécution, une valeur d'au moins une grandeur caractéristique représentative d'une utilisation de la plateforme, chaque valeur acquise de grandeur caractéristique étant associée à l'application logicielle respective ;
- un module de comparaison configuré pour comparer, pour chaque application logicielle en cours d'exécution, chaque valeur acquise avec un seuil respectif correspondant à la grandeur caractéristique ;
- un module d'arrêt configuré pour arrêter, pour chaque application logicielle en cours d'exécution, l'exécution de l'application logicielle respective si au moins une valeur acquise est supérieure au seuil respectif ; et
pour chaque grandeur caractéristique, le seuil respectif est déterminé pour une application contentionnante de référence lors de l'exécution de ladite application contentionnante de référence et d'une application sensible de référence au cours d'une phase préliminaire ; l'application contentionnante de référence étant propre à engendrer une augmentation d'un temps d'exécution de l'application sensible de référence selon un ratio de contention prédéfini, le ratio de contention étant égal au temps d'exécution de l'application sensible de référence lorsqu'exécutée en même temps que l'application contentionnante de référence divisé par un temps d'exécution de l'application sensible de référence lorsqu'exécutée seule par la plateforme ; la phase préliminaire précédant la surveillance de chaque application logicielle.

L'invention a également pour objet un système électronique avionique comprenant :
- une mémoire apte à stocker au moins une application logicielle avionique ;
- une plateforme apte à exécuter chaque application logicielle avionique, la plateforme hébergeant un système d'exploitation ; et
- un dispositif électronique de surveillance de chaque application logicielle avionique, le dispositif électronique de surveillance étant tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

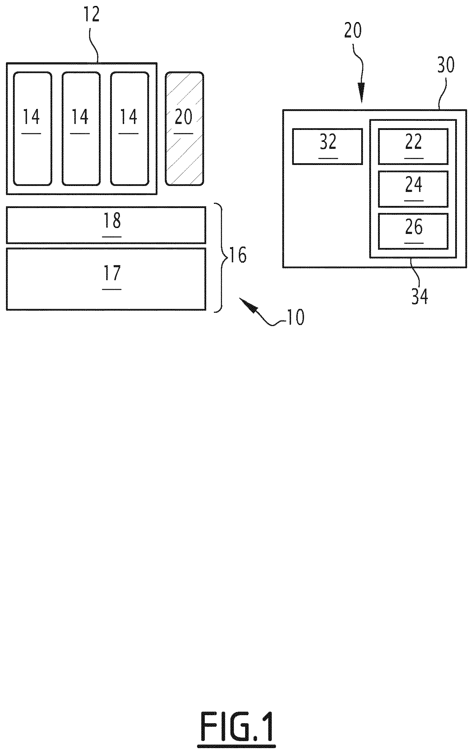

- la figure 1 est une représentation schématique d'un système électronique avionique selon l'invention, comprenant une mémoire apte à stocker au moins une application logicielle avionique ; une plateforme apte à exécuter chaque application logicielle avionique, la plateforme comportant des ressources et hébergeant un système d'exploitation ; et un dispositif électronique de surveillance de chaque application logicielle avionique ;

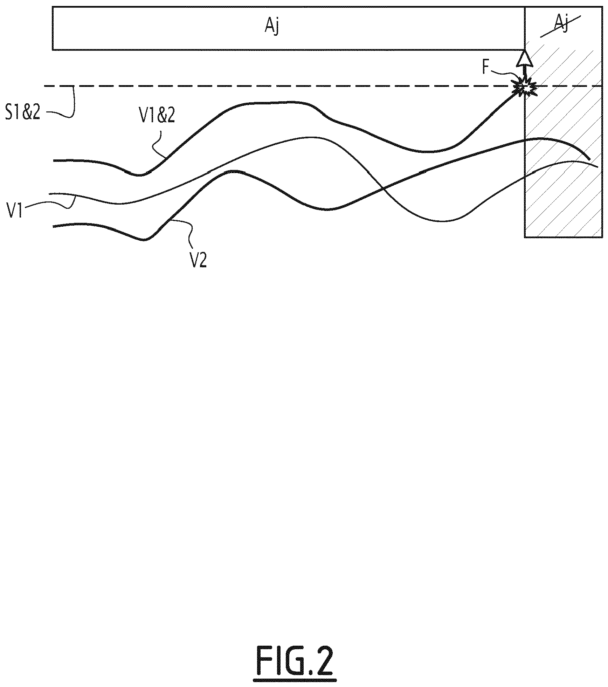

- la figure 2 est une représentation schématique illustrant l'acquisition de valeurs successives de plusieurs grandeurs caractéristiques représentatives d'une utilisation de la plateforme, ceci pour une application logicielle respective, la comparaison des valeurs successives avec un seuil respectif pour chaque grandeur caractéristique, et l'arrêt de l'exécution de l'application logicielle surveillée si au moins une valeur acquise est supérieure au seuil respectif pour la grandeur caractéristique correspondante ; et

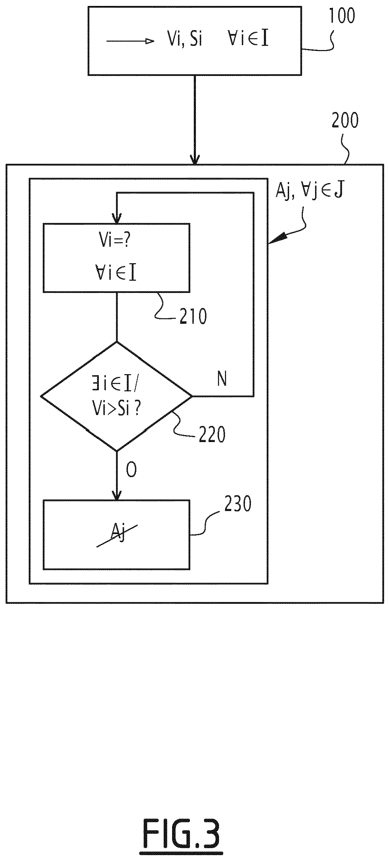

- la figure 3 est un organigramme d'un procédé, selon l'invention, de surveillance d'application(s) logicielle(s) avionique(s) apte(s) à être exécutée(s) sur la plateforme, le procédé étant mis en oeuvre par le dispositif de surveillance de la figure 1.

Dans la suite de la description, les expressions « sensiblement égal(e) à » et « de l'ordre de » définissent chacune une relation d'égalité à plus ou moins 20%, de préférence à plus ou moins 10%, de préférence encore à plus ou moins 5%.

Sur la figure 1, un système électronique avionique 10, destiné à être embarqué à bord d'un aéronef, comprend une mémoire 12 apte à stocker au moins une application logicielle avionique 14 ; une plateforme 16 apte à exécuter chaque application logicielle avionique 14, la plateforme 16 comportant des ressources 17 et hébergeant un système d'exploitation 18.

Le système électronique avionique 10 comprend en outre, selon l'invention, un dispositif électronique 20 de surveillance d'application(s) logicielle(s) avionique(s) 14.

L'aéronef est de préférence un avion. En variante, l'aéronef est un hélicoptère, ou encore un drone piloté à distance par un pilote.

Dans l'exemple de la figure 1, la mémoire 12 est apte à stocker trois applications logicielles avioniques 14 distinctes, et le dispositif électronique de surveillance 20 est alors configuré pour surveiller au moins une application logicielle avionique 14, et de préférence chacune de ces applications logicielles avioniques 14.

Chaque application logicielle avionique 14 est destinée à être exécutée par la plateforme 16 et alors conçue pour émettre un ou plusieurs appels à destination du système d'exploitation 18 hébergé par la plateforme 16 et est également configurée pour utiliser des ressources 17 de la plateforme 16.

Chaque application logicielle avionique 14 est également appelée fonction avionique. Les applications logicielles avioniques 14 remplissent différentes fonctions pour l'accomplissement d'un vol, et sont par exemple installées sur différentes plateformes 16 et utilisent les ressources 17 desdites plateformes 16.

De telles fonctions étant critiques, comme par exemple le système de freinage ou le système de gestion du vol, chaque application logicielle avionique 14 est de préférence surveillée régulièrement par le dispositif électronique de surveillance 20, pendant sensiblement toute la durée d'exécution de l'application logicielle avionique 14 par la plateforme 16.

La plateforme 16 est destinée à être embarquée à bord de l'aéronef. La plateforme 16 est, par exemple, une unité de traitement d'informations formée d'au moins un processeur multicoeur adapté pour exécuter les applications logicielles avioniques 14 et d'une ou plusieurs mémoires associées à l'au moins un processeur multicoeur.

Les ressources 17 de la plateforme 16 sont des éléments physiques ou logiques propres à être mis à disposition de la ou des applications logicielles avioniques 14. Les ressources 17 sont, par exemple, réparties en les catégories suivantes :
- les ressources de type traitement de données (en anglais « *processing* »). De telles ressources sont, par exemple, la puissance de calcul d'un processeur ou la capacité de stockage d'une mémoire.
- les ressources de type entrées et sorties.
- les ressources spécifiques au réseau avionique. De telles ressources sont, par exemple, les routeurs de communication d'un réseau ARINC664, en particulier ARINC664 Partie 3 ou ARINC664 Partie 7.
- les ressources de type graphique, c'est-à-dire les ressources permettant un affichage. Un écran est un exemple de telles ressources.
- les ressources de type mémoire de masse (en anglais « *mass memory* »).

Le système d'exploitation 18 est, par exemple, un système d'exploitation conforme à la norme ARINC 653, ou un système d'exploitation POSIX, ou encore un hyperviseur, ou encore un middleware.

L'homme du métier comprendra alors que le système d'exploitation 18 s'entend au sens large et est, de manière plus générale, un ensemble d'au moins un logiciel de base, conçu pour offrir des services de différents types à chaque application 14.

Un service est donc une fonction du logiciel de base utilisable par la ou les applications 14 et atteignable par un appel, également appelé appel à un service (de l'OS) ou encore appel système. Un exemple de logiciel de base est un OS ARINC 653 ou POSIX qui fournit de tels services. Dans le contexte de l'invention, l'homme du métier comprendra que c'est la notion d'appel à un service qui importe, et non pas le service en tant que tel, offert par le logiciel de base.

Les services offerts par le système d'exploitation 18 sont connus en soi, et sont par exemple des services d'acquisition d'entrée(s)/sortie(s), de gestion de processus, de gestion de protocole(s) de communication, etc. Les types de service sont alors l'acquisition d'entrée(s)/sortie(s), la gestion de processus, la gestion de protocole(s) de communication et la gestion d'une temporisation, en particulier son déclenchement.

L'homme du métier notera que les normes ARINC 653 et POSIX comportent, par exemple, chacune une liste des services généralement employés dans le domaine aéronautique. L'homme du métier observera toutefois que l'invention concerne plus généralement tout logiciel de base adapté à une application logicielle avionique 14, dans la mesure où le ou les services offerts par ce logiciel de base, ainsi que le ou les appels au(x) service(s) émis par chaque application logicielle avionique 14, sont identifiables.

Le dispositif électronique de surveillance 20 est configuré pour surveiller au moins une application logicielle avionique 14, et de préférence chaque application logicielle avionique 14, apte à être exécutée sur la plateforme 16.

Pour effectuer cette surveillance, le dispositif électronique de surveillance 20 comprend un module 22 d'acquisition, pour chaque application logicielle 14 en cours d'exécution, également notée Aj, d'une valeur d'au moins une grandeur caractéristique Vi représentative d'une utilisation de la plateforme 16 ; un module 24 de comparaison, pour chaque application logicielle 14, Aj en cours d'exécution, de chaque valeur acquise avec un seuil respectif Si correspondant à la grandeur caractéristique Vi ; et un module 26 d'arrêt, pour chaque application logicielle 14, Aj surveillée, de l'exécution de l'application logicielle 14, Aj respective si au moins une valeur acquise est supérieure au seuil respectif Si.

Pour la notation Vi associée à une grandeur caractéristique respective, également appelée variable caractéristique respective, i est un indice appartenant à un ensemble I contenant tous les indices de grandeurs caractéristiques, ou variables caractéristiques, prises en compte. L'homme du métier observera que l'indice i est susceptible d'être un indice combiné, tel que l'indice 1&2 dans l'exemple de la figure 2, signifiant dans cet exemple que la grandeur caractéristique combinée V1&2 correspondant à une combinaison, telle qu'une combinaison linéaire, de grandeurs caractéristiques V1, V2 est prise en compte. Dans cet exemple de la figure 2, la grandeur caractéristique combinée V1&2 est prise en compte en sus des grandeurs caractéristiques V1, V2 respectives.

L'homme du métier comprendra en outre que lorsqu'une grandeur caractéristique combinée est prise en compte, alors un seuil combiné est prévu et associé à cette grandeur caractéristique combinée, le seuil combiné étant typiquement distinct des seuils respectifs associés aux grandeurs caractéristiques respectives impliquées dans ladite grandeur caractéristique combinée. Autrement dit, dans l'exemple de la figure 2, la grandeur caractéristique combinée V1&2 est comparée à un seuil combiné S1&2, typiquement distinct des seuils respectifs S1, S2, non représentés, associés aux grandeurs caractéristiques V1, V2 respectives.

Pour la notation Aj assocciée à une application logicielle avionique 14 surveillée respective, j est un indice appartenant à un ensemble J contenant tous les indices des applications logicielles avioniques 14 surveillées.

Dans l'exemple de la figure 1, le dispositif de surveillance 20 est, par exemple distinct de la plateforme 16, et comprend une unité de traitement d'informations 30 formée par exemple d'un processeur 32 associé à une mémoire 34.

En variante, pour laquelle le dispositif de surveillance 20 est représenté en hachuré sur la figure 1, le dispositif de surveillance 20 est apte à être exécuté directement par la plateforme 16 et à utiliser alors ses ressources 17. Cette variante est un mode de réalisation préférentiel, et le dispositif de surveillance 20 est alors de préférence hébergé en outre au sein d'une partition mémoire spécifique de la plateforme 16, cette partition spécifique étant elle-même protégée contre des cyber-attaques, via par exemple un ou plusieurs contrôles d'accès et/ou une protection en intégrité. Selon cette variante où le dispositif de surveillance 20 est apte à être exécuté directement par la plateforme 16, le dispositif de surveillance 20 est par exemple inclus dans le système d'exploitation 18.

Dans l'exemple de la figure 1, que le dispositif de surveillance 20 soit distinct de la plateforme 16, ou bien hébergé et exécuté par la plateforme 16, le module d'acquisition 22, le module de comparaison 24 et le module d'arrêt 26 sont réalisés chacun sous forme d'un logiciel, ou d'une brique logicielle, exécutable par un processeur, tel que le processeur 32 lorsque le dispositif de surveillance 20 est distinct de la plateforme 16. La mémoire 34 du dispositif de surveillance 20 est alors apte à stocker un logiciel, pour chaque application logicielle Aj, d'une valeur d'au moins une grandeur caractéristique Vi représentative d'une utilisation de la plateforme 16; un logiciel de comparaison, pour chaque application logicielle Aj en cours d'exécution, de chaque valeur acquise avec un seuil respectif Si correspondant à la grandeur caractéristique Vi ; et un logiciel d'arrêt, pour chaque application logicielle Aj surveillée, de l'exécution de l'application logicielle Aj respective si au moins une valeur acquise est supérieure au seuil respectif Si.

En variante non représentée, le module d'acquisition 22, le module de comparaison 24 et le module d'arrêt 26 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*).

Lorsque le dispositif de surveillance 20 est réalisé sous forme d'un ou plusieurs logiciels, c'est-à-dire en forme d'un programme d'ordinateur, il est en outre apte à être enregistré sur un support, non représenté, lisible par ordinateur. Le support lisible par ordinateur est, par exemple, un médium adapté à mémoriser des instructions électroniques et capable d'être couplé à un bus d'un système informatique. A titre d'exemple, le support lisible est une disquette ou disque souple, (de la dénomination anglaise *Floppy disk*), un disque optique, un CD-ROM, un disque magnéto-optique, une mémoire ROM, une mémoire RAM, tout type de mémoire non volatile (par exemple, EPROM, EEPROM, FLASH, NVRAM) une carte magnétique ou une carte optique. Sur le support lisible est alors mémorisé un programme d'ordinateur comprenant des instructions logicielles.

Le module d'acquisition 22 est configuré pour acquérir, pour chaque application logicielle 14, Aj en cours d'exécution, une valeur d'au moins une grandeur caractéristique Vi représentative de l'utilisation de la plateforme 16, chaque valeur acquise de grandeur caractéristique Vi étant associée à l'application logicielle 14, Aj respective.

Le module d'acquisition 22 est préférentiellement configuré pour acquérir chaque valeur de grandeur caractéristique Vi séparément pour chacun des coeurs du processeur multicoeur.

Chaque grandeur caractéristique Vi est typiquement un élément de performance mesurable, également appelé registre de mesure de performance et noté PMR (de l'anglais *Performance Measurement Register*).

La plateforme 16 comporte, au sein de ses ressources mémoire, une mémoire vive, également appelée mémoire RAM (de l'anglais *tandem Access Memory*) ; une mémoire cache de premier niveau, également appelée cache L1 ; et une mémoire cache de deuxième niveau, également appelée cache L2 ; chacune étant connectée au processeur multicoeur de la plateforme.

Chaque grandeur caractéristique Vi est avantageusement une grandeur représentative de l'utilisation des ressources mémoire, en particulier représentative de l'utilisation de la mémoire vive, ou de la mémoire cache de premier niveau, ou encore de la mémoire cache de deuxième niveau.

Chaque grandeur caractéristique Vi est alors par exemple choisie parmi le groupe consistant en : une bande-passante occupée d'un bus d'accès à la mémoire vive ; un nombre de défauts de cache de premier niveau (de l'anglais *L1 cache miss*) ; un nombre de défauts de cache de deuxième niveau (de l'anglais *L2 cache miss*) ; un nombre de défauts de cache de troisième niveau (de l'anglais *L3 cache miss*) ; un nombre de changements de pages en mode DDR ; et une combinaison des grandeurs précitées.

En complément avantageux, chaque grandeur caractéristique Vi et chaque seuil respectif Si associé sont chacun exprimés par unité de temps. Chaque grandeur caractéristique Vi est alors par exemple choisie parmi le groupe consistant en : une bande-passante occupée d'un bus d'accès à la mémoire vive, exprimée par unité de temps ; un nombre de défauts de cache de premier niveau par unité de temps (de l'anglais *L1 cache miss*) ; un nombre de défauts de cache de deuxième niveau par unité de temps (de l'anglais *L2 cache miss*) ; un nombre de défauts de cache de troisième niveau par unité de temps (de l'anglais *L3 cache miss*) ; un nombre de changements de pages en mode DDR par unité de temps ; et une combinaison des grandeurs précitées. Chaque seuil respectif Si associé est alors exprimé de manière analogue.

Selon ce complément avantageux, le module d'acquisition 22 est configuré pour acquérir chaque valeur de grandeur caractéristique Vi en prenant en compte une durée d'acquisition, afin de ramener, i.e. rapporter, chaque valeur acquise à une unité de temps. Autrement dit, le module d'acquisition 22 est configuré pour acquérir chaque valeur de grandeur caractéristique Vi au cours d'une durée d'acquisition, en acquérant également la valeur de ladite durée d'acquisition, afin de diviser ensuite la valeur acquise de la grandeur caractéristique Vi par la valeur de la durée d'acquisition, pour exprimer la grandeur caractéristique Vi acquise par unité de temps.

Le module de comparaison 24 est configuré pour comparer, pour chaque application logicielle 14, Aj en cours d'exécution, chaque valeur acquise avec un seuil respectif Si correspondant à la grandeur caractéristique Vi.

Selon l'invention, pour chaque grandeur caractéristique Vi, le seuil respectif Si est déterminé pour une application contentionnante de référence, ceci lors de l'exécution à la fois de ladite application contentionnante de référence et d'une application sensible de référence, cette détermination étant effectuée au cours d'une phase préliminaire 100 précédant la surveillance de chaque application logicielle 14, Aj.

La mesure de la contention se détermine par une mesure de temps entre une application exécutée seule et la même application, utilisant le même contexte d'utilisation, exécutée en parallèle d'au moins une autre application. Partant de là, une application est typiquement caractérisée selon deux critères : la sensibilité et l'agressivité.

La sensibilité correspond à l'influence que peuvent avoir les autres applications sur l'application mesurée. Elle est proportionnelle à un allongement du temps d'exécution, et donc à la contention.

L'agressivité correspond à la capacité à ralentir les applications embarquées. Elle n'est pas influencée par les autres applications au sens contention du terme, mais peut se déplacer en fonction du contexte d'usage de chaque application.

Lors de la phase préliminaire 100, une première application permettant de caractériser le niveau de contention admissible par les autres applications est d'abord déterminée, la première application étant également appelée application sensible de référence. Une deuxième application, également appelée application contentionnante de référence, est ensuite déterminée afin de caractériser un niveau de contention admissible, le niveau de contention étant prédéfini.

Le niveau de contention est typiquement exprimé sous forme d'un ratio de contention représentant un allongement du temps d'exécution. Le ratio de contention est par exemple de l'ordre de 130%, i.e. de l'ordre de 1,3, représentant un allongement de l'ordre de 30% par rapport à un temps d'exécution nominal, sans contention.

L'application contentionnante de référence est alors propre à engendrer une augmentation d'un temps d'exécution de l'application sensible de référence selon le ratio de contention prédéfini, le ratio de contention étant égal au temps d'exécution de l'application sensible de référence lorsqu'exécutée en même temps que l'application contentionnante de référence divisé par un temps d'exécution de l'application sensible de référence lorsqu'exécutée seule par la plateforme 16.

En d'autres termes, si le ratio de contention prédéfini est égal à 1,30, alors le temps d'exécution de l'application sensible utilisée en parallèle de l'application contentionnante de référence est 30% supérieur à celui de cette même application sensible exécutée de manière isolée.

L'application sensible de référence vise à être la moins agressive possible. L'application sensible de référence est par exemple une application formée d'une boucle sensible exécutée plusieurs fois, la boucle sensible comportant plusieurs instructions de lecture en mémoire vive, avec pour chaque instruction un saut d'adresse en lecture prédéfini.

Le nombre d'exécutions de la boucle sensible est avantageusement égal à une taille d'une ligne de la mémoire cache de deuxième niveau divisée par une taille du saut d'adresse en lecture. Ceci permet de générer une éviction de ligne de cache en exécutant en variante, l'application sensible de référence, telle qu'une éviction de ligne de cache L2.

A titre d'exemple, la boucle sensible comporte quatre instructions de lecture en mémoire vive, telles que des instructions de type LOAD, avec pour chaque instruction un saut d'adresse en lecture prédéfini, tel qu'un saut d'adresse d'1 mot. Si la ligne de cache est de 16 mots, alors la boucle sensible exécutée seize fois (16 divisé par 1). Comme connu en soi, la taille des mots dépend de la plateforme 16, en particulier du processeur, des mémoires et du bus de données. Classiquement, les mots sont des mots de 8 bits, 16 bits, 32 bits ou encore 64 bits. Ici, les mots sont par exemple des mots de 32 bits.

L'application contentionnante de référence vise au contraire à manipuler des éléments les plus agressifs possibles, mais qui sont séquencées de façon à limiter la contention à celle prédéfinie. L'application contentionnante de référence est par exemple une application formée d'une boucle contentionnante exécutée plusieurs fois, la boucle contentionnante comportant plusieurs instructions d'écriture en mémoire vive, avec pour chaque instruction un saut d'adresse en écriture prédéfini.

Le nombre d'exécutions de la boucle contentionnante étant de préférence égal à une taille d'une ligne de la mémoire cache de deuxième niveau divisée par une taille du saut d'adresse en écriture. Ceci permet de générer une éviction de ligne de cache en exécutant l'application contentionnante de référence, telle qu'une éviction de ligne de cache L2.

A titre d'exemple, la boucle contentionnante comporte six instructions d'écriture en mémoire vive, telles que des instructions de type STORE, avec pour chaque instruction un saut d'adresse en lecture prédéfini, tel qu'un saut d'adresse de 4 mots. Si la ligne de cache est de 16 mots, alors la boucle contentionnante exécutée quatre fois (16 divisé par 4). Comme indiqué précédemment, les mots sont par exemple des mots de 32 bits.

Lors de la phase préliminaire 100, l'application contentionnante de référence est alors caractérisée pour vérifier le niveau de contention qu'elle génère, en particulier que le niveau de contention généré correspond sensiblement au ratio de contention prédéfini.

Lors de la phase préliminaire 100, l'application contentionnante de référence est selon l'invention également utilisée pour déterminer le seuil respectif pour chaque grandeur caractéristique Vi. Autrement dit, l'application contentionnante de référence permet de déterminer une limite admissible pour chacune des grandeurs caractéristiques Vi observées, c'est-à-dire prises en compte, lors la surveillance ultérieure d'application(s) logicielle(s) avionique(s) 14, Aj.

Lorsqu'on complément avantageux chaque seuil respectif Si est exprimé par unité de temps, la détermination de chaque seuil respectif Si à partir de l'application contentionnante de référence est alors effectuée en prenant en compte une durée d'observation au cours de laquelle la grandeur caractéristique Vi est observée pour l'application contentionnante de référence afin de déterminer le seuil respectif associé. Chaque seuil respectif Si est alors déterminé en divisant, par la durée d'observation, la valeur limite de la grandeur caractéristique Vi résultant de cette observation, afin d'être ainsi exprimé par unité de temps.

Chaque seuil respectif Si est de préférence identique d'un coeur à l'autre du processeur multicoeur.

En variante, chaque seuil respectif Si est spécifique à un coeur du processeur multicoeur, et est alors potentiellement distinct d'un coeur à l'autre du processeur multicoeur. Selon cette variante, un niveau de contention prédéfini est prévu séparément pour chacun des coeurs, et une application contentionnante de référence est alors également déterminée séparément pour chacun des coeurs. Autrement dit, selon cette variante, le nombre de niveaux de contention prédéfinis, et par conséquent le nombre de ratios de contention prédéfinis, ainsi que le nombre d'applications contentionnantes de référence, sont alors chacun égaux au nombre de coeurs du processeur multicoeur.

Selon cette variante, en d'autres termes encore, le choix du niveau de contention prédéfinie, la détermination de l'application contentionnante de référence, et enfin la détermination du seuil respectif Si pour chacune des grandeurs caractéristiques Vi est alors propre à chaque coeur du processeur multicoeur. Ce choix et ces déterminations, spécifiques à chaque coeur du processeur multicoeur, sont alors effectués séparément pour chaque coeur du processeur multicoeur. Ce choix et ces déterminations sont typiquement effectués en appliquant, pour chaque coeur respectif du processeur multicoeur, la méthode décrite précédemment de détermination d'un seuil respectif Si valable pour tous les coeurs. La méthode de détermination définie ci-dessus est alors mise en oeuvre pour un coeur après l'autre du processeur multicoeur.

L'homme du métier comprendra alors que si l'une des applications logicielle(s) avionique(s) 14, Aj surveillées dépasse l'une de ces limites admissibles lors de ladite surveillance, alors cela signifie l'application concernée génère une contention plus importante que l'application contentionnante de référence, c'est-à-dire une contention de niveau supérieur au niveau de contention prédéfini, choisi préalablement, et donc que l'application concernée doit être arrêtée, ou tuée (de l'anglais *kill*), pour ne pas provoquer une perturbation trop importante des autres applications logicielles avioniques exécutées en parallèle par le processeur multicoeur.

Le module d'arrêt 26 est alors, pour chaque application logicielle 14 en cours d'exécution, configuré pour arrêter l'exécution de l'application logicielle 14 respective si au moins une valeur acquise est supérieure au seuil respectif Si. Autrement dit, le module d'arrêt 26 est configuré pour tuer, i.e. interrompre définitivement, l'exécution de l'application logicielle 14 respective si au moins une valeur acquise de grandeur caractéristique est, pour ladite application logicielle 14, supérieure au seuil respectif Si associé à ladite grandeur caractéristique.

Dans l'exemple de la figure 2, illustrant la surveillance de l'application logicielle Aj respective, la courbe correspondant à la grandeur caractéristique V1&2, qui est d'ailleurs une grandeur caractéristique combinée comme expliqué ci-dessus, franchit en un instant temporel F le seuil S1&2 associé à ladite grandeur caractéristique combinée V1 &2. Du fait de ce dépassement de seuil, l'application logicielle Aj est alors arrêtée, i.e. tuée, en l'instant temporel F, comme représenté par la zone grisée et hachurée, ainsi que la notation Aj barrée, après l'instant temporel F.

Le fonctionnement du dispositif électronique de surveillance 20 selon l'invention va être à présent décrit en regard de la figure 3 représentant un organigramme du procédé, selon l'invention, de surveillance d'application(s) logicielle(s) avionique(s) 14 exécutée(s) par la plateforme avionique 16 comportant le processeur multicoeur, le procédé étant mis en oeuvre par le dispositif électronique de surveillance 20.

Le procédé de surveillance comprend tout d'abord une phase préliminaire 100, décrite précédemment, suivie d'une phase de surveillance 200. Chaque grandeur caractéristique Vi ou chaque seuil Si est préférentiellement défini par rapport au temps, c'est-à-dire exprimé par unité de temps. L'acquisition chaque grandeur caractéristique Vi est alors effectuée en prenant en compte une durée d'acquisition, afin de ramener, i.e. rapporter, chaque valeur acquise à une unité de temps. De même, les seuils de comparaison sont déterminés vis-à-vis du temps d'acquisition, c'est-à-dire en prenant en compte une durée d'acquisition, afin de ramener, i.e. rapporter, chaque seuil Si à une unité de temps.

La phase préliminaire 100 permet de déterminer l'ensemble de grandeur(s) caractéristique(s) Vi, i.e. chaque variable caractéristique Vi pour tout indice i appartenant à l'ensemble I ; ainsi que l'ensemble de seuil(s) Si respectif chacun d'une grandeur caractéristique correspondante, i.e. chaque seuil Si pour tout indice i appartenant à l'ensemble l, comme représenté à la figure 3. A l'issue de cette phase préliminaire 100, chaque seuil Si est par exemple défini proportionnellement à une valeur nominale de la grandeur caractéristique Vi associée. Autrement dit, chaque seuil Si est alors égal à ladite valeur nominale de la grandeur caractéristique Vi multipliée par un multiple αi, le multiple αi étant un nombre réel strictement supérieur à 1.

Ensuite, la phase de surveillance 200 est effectuée pour chacune des applications logicielles avioniques 14 surveillées, c'est-à-dire pour chaque application logicielle Aj en cours d'exécution, et pour tout indice j appartenant à l'ensemble J contenant les indices des applications logicielles avioniques 14 surveillées.

La phase de surveillance 200 comprend une étape initiale d'acquisition 210 lors de laquelle le dispositif de surveillance 20 acquiert, via son module d'acquisition 22, la valeur d'au moins une grandeur caractéristique Vi représentative de l'utilisation de la plateforme 16. Le module d'acquisition 22 acquiert alors typiquement une ou plusieurs valeurs de registre de mesure de performance, également notées PMRi.

Chaque grandeur caractéristique Vi dont la valeur est acquise par le module d'acquisition 22 est par exemple la bande-passante occupée du bus d'accès à la mémoire vive, le nombre de défauts de cache de premier niveau, le nombre de défauts de cache de deuxième niveau, ou le nombre de changements de pages en mode DDR ; ou encore une combinaison de ces grandeurs.

À l'issue de l'étape d'acquisition 210, la phase de surveillance 200 comprend une étape de comparaison 220 au cours de laquelle le dispositif de surveillance 20 compare, via son module de comparaison 24, chaque valeur acquise de grandeur caractéristique Vi, préférentiellement ramenée à l'unité de temps, avec un seuil respectif Si, lui aussi préférentiellement ramené à l'unité de temps, correspondant à ladite grandeur caractéristique Vi.

Lors de l'étape de comparaison 220, le module de comparaison 24 détermine en particulier si la valeur acquise de la grandeur caractéristique Vi est supérieure au seuil respectif Si, et passe le cas échéant à l'étape suivante d'arrêt 230.

Sinon, si la valeur acquise de la grandeur caractéristique Vi est inférieure ou égale au seuil respectif Si, alors le dispositif de surveillance 20 retourne à l'étape initiale d'acquisition 210 pour effectuer une nouvelle acquisition de valeur(s) de grandeur(s) caractéristique(s) Vi.

Si l'étape de comparaison 220 aboutit à la détection d'au moins un franchissement de seuil respectif Si, alors la phase surveillance 200 comprend l'étape d'arrêt 230 à la suite de l'étape de comparaison 220.

Lors de l'étape d'arrêt 230, le dispositif de surveillance 20 arrête, via son module d'arrêt 26, l'exécution de la ou chaque application logicielle respective pour laquelle au moins une valeur acquise de grandeur caractéristique Vi est supérieure au seuil respectif Si correspondant à ladite grandeur caractéristique Vi.

Cette étape d'arrêt 230 permet donc d'arrêter, c'est-à-dire de tuer ou encore d'interrompre définitivement, la ou chaque application logicielle engendrant une contention supérieure au niveau de contention prédéfini, caractérisé par l'application contentionnante de référence ayant servi à déterminer l'ensemble de grandeur(s) caractéristique(s) Vi et l'ensemble de seuil(s) Si.

A l'issue de l'étape d'arrêt 230, le dispositif de surveillance 20 retourne à l'étape initiale d'acquisition 210 pour effectuer une nouvelle acquisition de valeur(s) de grandeur(s) caractéristique(s) Vi pour chaque application logicielle Vj encore en cours d'exécution.

L'homme du métier comprendra alors que, lors de la phase de surveillance 200, les étapes d'acquisition 210, de comparaison 220, et le cas échéant d'arrêt 230, sont effectuées, de préférence en parallèle, pour chaque application logicielle Aj.

La phase de surveillance 200 est par exemple effectuée, c'est-à-dire mise en oeuvre, lors de chaque appel d'une application au système d'exploitation 18. Autrement dit, les étapes d'acquisition 210 et de comparaison 220 sont alors réitérées lors de chaque appel au système d'exploitation 18.

En complément ou en variante, le système d'exploitation 18 est un système d'exploitation fonctionnant de manière synchrone avec des événements système périodiques, et la phase de surveillance 200 est effectuée lors de chaque événement système. Autrement dit, les étapes d'acquisition 210 et de comparaison 220 sont alors réitérées lors de chaque événement système.

On conçoit ainsi que le dispositif de surveillance 20 et le procédé de surveillance selon l'invention permettent de surveiller plus efficacement l'au moins une application logicielle avionique 14.

En particulier, le dispositif de surveillance 20 et le procédé de surveillance selon l'invention permettent d'anticiper la contention et de sanctionner la ou les applications qui sont à l'origine des ralentissements subis par les autres applications, ceci plutôt que de sanctionner de manière basique la ou les applications logicielles avioniques 14 qui dépasseraient leur budget de temps, i.e. leur allocation, alors qu'elles ne sont pas nécessairement à l'origine de la contention.

## Revendications

1. Procédé de surveillance d'application(s) logicielle(s) avionique(s) (14, Aj) apte(s) à être exécutée(s) par une plateforme avionique (16), la plateforme avionique (16) étant destinée à être embarquée à bord d'un aéronef, comportant un processeur multicoeur et hébergeant un système d'exploitation (18), le procédé étant mis en oeuvre par un dispositif électronique de surveillance (20) et comprenant, pour chaque application logicielle (14, Aj) en cours d'exécution, une phase de surveillance (200) comportant les étapes suivantes :
- acquisition (210) d'une valeur d'au moins une grandeur caractéristique (Vi) représentative d'une utilisation de la plateforme (16), chaque valeur acquise de grandeur caractéristique (Vi) étant associée à l'application logicielle (14, Aj) respective ;
- comparaison de chaque valeur acquise avec un seuil respectif (Si) correspondant à la grandeur caractéristique (Vi) ;
- arrêt de l'exécution de l'application logicielle (14, Aj) respective si au moins une valeur acquise est supérieure au seuil respectif (Si) ;
**caractérisé en ce que**, pour chaque grandeur caractéristique (Vi), le seuil respectif (Si) est déterminé pour une application contentionnante de référence lors de l'exécution de ladite application contentionnante de référence et d'une application sensible de référence au cours d'une phase préliminaire (100) ; l'application contentionnante de référence étant propre à engendrer une augmentation d'un temps d'exécution de l'application sensible de référence selon un ratio de contention prédéfini, le ratio de contention étant égal au temps d'exécution de l'application sensible de référence lorsqu'exécutée en même temps que l'application contentionnante de référence divisé par un temps d'exécution de l'application sensible de référence lorsqu'exécutée seule par la plateforme (16) ; la phase préliminaire (100) précédant la phase de surveillance (200) de chaque application logicielle (14, Aj).

2. Procédé selon la revendication 1, dans lequel chaque grandeur caractéristique (Vi) et chaque seuil respectif (Si) associé sont chacun exprimés par unité de temps.

3. Procédé selon la revendication 1 ou 2, dans lequel la plateforme (16) comporte des ressources mémoire incluant une mémoire vive, une mémoire cache de premier niveau et une mémoire cache de deuxième niveau ; et chaque grandeur caractéristique (Vi) est une grandeur représentative de l'utilisation des ressources mémoire.

4. Procédé selon la revendication 3, dans lequel chaque grandeur caractéristique (Vi) est choisie parmi le groupe consistant en : une bande-passante occupée d'un bus d'accès à la mémoire vive ; un nombre de défauts de cache de premier niveau ; un nombre de défauts de cache de deuxième niveau ; un nombre de défauts de cache de troisième niveau ; un nombre de changements de pages en mode DDR ; et une combinaison des grandeurs précitées.

5. Procédé selon la revendication 3 ou 4, dans lequel lors de la phase préliminaire (100), l'application contentionnante de référence est une application formée d'une boucle contentionnante exécutée plusieurs fois, la boucle contentionnante comportant plusieurs instructions d'écriture en mémoire vive, avec pour chaque instruction un saut d'adresse en écriture prédéfini ;
le nombre d'exécutions de la boucle contentionnante étant de préférence égal à une taille d'une ligne de la mémoire cache de deuxième niveau divisée par une taille du saut d'adresse en écriture.

6. Procédé selon l'une quelconque des revendications 3 à 5, dans lequel lors de la phase préliminaire (100), l'application sensible de référence est une application formée d'une boucle sensible exécutée plusieurs fois, la boucle sensible comportant plusieurs instructions de lecture en mémoire vive, avec pour chaque instruction un saut d'adresse en lecture prédéfini ;
le nombre d'exécutions de la boucle sensible étant de préférence égal à une taille d'une ligne de la mémoire cache de deuxième niveau divisée par une taille du saut d'adresse en lecture.

7. Procédé selon l'une quelconque des revendications précédentes, dans lequel lors de l'étape d'acquisition (210), chaque valeur de grandeur caractéristique (Vi) est acquise séparément pour chacun des coeurs du processeur multicoeur.

8. Procédé selon l'une quelconque des revendications précédentes, dans lequel les étapes d'acquisition (210) et de comparaison (220) sont réitérées lors de chaque appel au système d'exploitation (18).

9. Procédé selon l'une quelconque des revendications précédentes, dans lequel le système d'exploitation (18) est un système d'exploitation fonctionnant de manière synchrone avec des événements système périodiques, et les étapes d'acquisition (210) et de comparaison (220) sont réitérées lors de chaque évènement système.

10. Programme d'ordinateur comportant des instructions logicielles qui, lorsqu'elles sont exécutées par un ordinateur, mettent en oeuvre un procédé selon l'une quelconque des revendications précédentes.

11. Dispositif électronique (20) de surveillance d'application(s) logicielle(s) avionique(s) (14, Aj) apte(s) à être exécutée(s) par une plateforme avionique (16), la plateforme avionique (16) étant destinée à être embarquée à bord d'un aéronef, comportant un processeur multicoeur et hébergeant un système d'exploitation (18), le dispositif de surveillance (20) comprenant :
- un module d'acquisition (22) configuré pour acquérir, pour chaque application logicielle (14, Aj) en cours d'exécution, une valeur d'au moins une grandeur caractéristique (Vi) représentative d'une utilisation de la plateforme (16), chaque valeur acquise de grandeur caractéristique (Vi) étant associée à l'application logicielle (14, Aj) respective ;
- un module de comparaison (24) configuré pour comparer, pour chaque application logicielle (14, Aj) en cours d'exécution, chaque valeur acquise avec un seuil respectif (Si) correspondant à la grandeur caractéristique (Vi) ;
- un module d'arrêt (26) configuré pour arrêter, pour chaque application logicielle (14, Aj) en cours d'exécution, l'exécution de l'application logicielle (14, Aj) respective si au moins une valeur acquise est supérieure au seuil respectif (Si) ;
**caractérisé en ce que**, pour chaque grandeur caractéristique (Vi), le seuil respectif (Si) est déterminé pour une application contentionnante de référence lors de l'exécution de ladite application contentionnante de référence et d'une application sensible de référence au cours d'une phase préliminaire (100) ; l'application contentionnante de référence étant propre à engendrer une augmentation d'un temps d'exécution de l'application sensible de référence selon un ratio de contention prédéfini, le ratio de contention étant égal au temps d'exécution de l'application sensible de référence lorsqu'exécutée en même temps que l'application contentionnante de référence divisé par un temps d'exécution de l'application sensible de référence lorsqu'exécutée seule par la plateforme (16) ; la phase préliminaire (100) précédant la surveillance (200) de chaque application logicielle (14, Aj).

12. Système électronique avionique (10) comprenant :
- une mémoire (12) apte à stocker au moins une application logicielle avionique (14, Aj) ;
- une plateforme (16) apte à exécuter chaque application logicielle avionique (14, Aj), la plateforme (16) hébergeant un système d'exploitation (18) ; et
- un dispositif électronique (20) de surveillance de chaque application logicielle avionique (14, Aj), le dispositif électronique de surveillance (20) étant selon la revendication précédente.
